# EUROPEAN PATENT APPLICATION

(11) **EP 2 337 285 A1**
(43) Date of publication of application: **22.06.2011**
(21) Application number: 09818752.9
(22) Date of filing: 19.06.2009
(51) Int. Cl.: H04L 12/58

(54) **A METHOD FOR REALIZING MESSAGE INTERWORKING AND A CONVERGED SERVICE SYSTEM**

(30) Priority: 10.10.2008 CN 200810169342
(71) Applicant: ZTE Corporation, Shenzhen, Guangdong 518057 (CN)
(72) Inventor: LI, Fengjun, Guangdong 518057 (CN); ALI, Ghazanfar, Guangdong 518057 (CN)
(74) Representative: Ilgart, Jean-Christophe
(86) International application number: PCT/CN2009/072363
(87) International publication number: WO 2010/040288

(57) **Abstract**

The present invention provides a method for realizing a message interaction and a converged service system, wherein the method includes: the converged service system receiving a first message sent by a converged service terminal and a first identifier of the first message, and forwarding the first message to the traditional message system (S402); the converged service system establishing a first corresponding relationship between a pre-designated second identifier carried in a second message sent by the traditional message system and the first identifier, or establishing a second corresponding relationship between a second identifier sent, in response to the first message, by the traditional message system and the first identifier (S404); and in the case of receiving the second message carrying the second identifier sent by the traditional message system, the converged service system processing the second message according to the first corresponding relationship or the second corresponding relationship (S406).

## Description

### Filed of the Invention

The present invention relates to communication field, and specifically to a method for realizing a message interaction and a converged service system.

### Background of the Invention

At present, under the trend in which a network develops towards Internet Protocol (IP for short)-based, traditional telecommunication services are gradually transferred to the IP-based next generation network, for example, the 3^{rd} Generation Partnership Project (3GPP for short), the 3^{rd} Generation Partnership Project 2 (3GPP2 for short), and the Telecommunications and Internet Converged Service and Protocols for Advanced Networking (TISPAN for short). All standard organizations use the Session Initial Protocol (SIP for short) as the base protocol of the next generation core network. Moreover, an IP network using the SIP has gradually become the network basis of service application.

A converged service system supports message sending among users of converged service as well as message sending between a user of converged service and a user of traditional message.

However, during a process in which the converged service system intercommunicates with the traditional message system, the message identifier of the converged service system and the message identifier of the traditional message system can not be correlated correctly due to different methods for generating a message identifier, and it can not be ensured the user of converged service can obtain correctly a return receipt or a reading report returned by the user of traditional message system.

Currently, with respect to the current problems that the message identifier of the converged service system and the message identifier of the traditional message system can not be correlated correctly and that it can not ensure that the user of converged service can obtain correctly a return receipt or a reading report retuned by the user of traditional message system, there is no effective technical solution yet.

### Summary of the Invention

The present invention is proposed in consideration of the problems that the message identifier of the converged service system and the message identifier of the traditional message system can not be correlated correctly, and that it can not ensure the user of converged service can obtain correctly a return receipt or a reading report returned by the traditional message system user. For this purpose, the main object of the present invention is to provide a method for realizing a message interaction and a converged service system for solving at least one of the above problems.

According to one aspect of the present invention, a method for realizing a message interaction is provided to realize the message interaction between a converged service system and a traditional message system.

The method for realizing the message interaction according to the present invention comprises: the converged service system receiving a first message sent by a converged service terminal and a first identifier of the first message, and forwarding the first message to the traditional message system;

the converged service system establishing a first corresponding relationship between a pre-designated second identifier carried in a second message sent by the traditional message system and the first identifier, or establishing a second corresponding relationship between a second identifier sent, in response to the first message, by the traditional message system and the first identifier; and

in the case of receiving the second message carrying the second identifier sent by the traditional message system, the converged service system processing the second message according to the first corresponding relationship or the second corresponding relationship.

Further, before the converged service system forwards the first message sent by the converged service terminal to the traditional message system, the method may also comprise: the converged service system converting a format of the first message into a format supported by the traditional message system so as to forward it to the traditional message system.

Further, in the case that the converged service system does not pre-designate the second identifier, after the traditional message system receives the message from the converged service system, the method may further comprise: the traditional message system sending the message received from the converged service system to a traditional message terminal; the traditional message system returning a response message carrying the second identifier to the converged service system.

Moreover, after the traditional message system returns the response message carrying the second identifier to the converged service system, the method may also comprise: the traditional message system sending the second message carrying the second identifier immediately or after a predetermined time interval to the converged service system.

Further, in the case that the converged service system pre-designates the second identifier, after the traditional message system receives the message from the converged service system, the method may also comprise: the traditional message system sending the message received form the converged service system to the traditional message terminal.

Further, before the traditional message system sends the second message to the converged service system, the method may also comprise: the traditional message system converting a format of the second message into a format supported by the converged service system so as to forward it to the converged service system.

Further, the operation that the converged service system processes the second message according to the first corresponding relationship or the second corresponding relationship is: the converged service system replacing the second identifier carried in the second message with the first identifier, and forwarding the second message to the converged service terminal.

Preferably, the above second message is one of a return receipt and a reading report.

According to another aspect of the present invention, a converged service system is provided for realizing a message interaction with a traditional message system.

The converged service system according to the present invention comprises: storage means, configured to save a first message sent by a converged service terminal and a fist identifier of the first message;
sending means, connected to the storage means, configured to forward the first message stored by the storage means to the traditional message system;
first receiving means or designating means, wherein the first receiving means is configured to receive a response message carrying a second identifier returned by the traditional message system in response to the first message, and the designating means is configured to designate a second identifier carried in a second message sent by the traditional message system in response to the first message;
second receiving means, configured to receive a second message carrying the second identifier sent by the traditional message system in response to the first message;
establishing means, connected to the storage means, and connected to the first receiving means or the designated means, configured to establish a first corresponding relationship between the first identifier stored by the storage means and the second identifier received by the first receiving means, or to establish a second corresponding relationship between the first identifier and the second identifier designated by the denigrating means; and

processing means, connected to the establishing means and the second receiving means, configured to process the second message received by the second receiving means according to the first corresponding relationship or the second corresponding relationship established by the establishing means.

Further, the above sending means may include: converting means, configured to convert a format of the fist message stored by the storage means into a format supported by the traditional message system so as to forward it to the traditional message system.

Further, the above processing means may comprise: replacing means, configured to replace the second identifier of the second message received by the second receiving means with the first identifier; forwarding means, configured to forward the second message in which an identifier has been replaced by the replacing means to the converged service terminal.

Preferably, the above second message is one of a return receipt and a reading report.

By means of the above technical solution of the present invention, the corresponding relationship between the message identifier of the converged service system and the message identifier of the traditional message system is established, and the return receipt or the reading report is sent correctly to the terminal of the converged service system based on the corresponding relationship, the problem that the terminal of the converged service system can not receive correctly the return receipt or the reading report after sending the message to the terminal of the traditional message system can be prevented, so as to improve effectively the efficiency of service processing between the converged service system and the traditional message system and enhance users' experience.

### Brief Description of the Drawings

The drawings described herein provide a further understanding of the present invention, and form a part of the present application. The illustrative embodiments of the present invention and the description thereof are used to explain the present invention without unduly limiting the present invention, wherein
Fig. 1 is a block diagram of a network architecture comprising a converged service system according to an embodiment of the present invention;
Fig. 2 is a block diagram of a structure of a converged service system according to a system embodiment of the present invention;
Fig. 3 is a block diagram of a preferable structure of a converged service system according to a system embodiment of the present invention;
Fig. 4 is a flow chart of a method for realizing a message interaction according to a method embodiment of the present invention; and
Fig. 5 is a signaling flow chart of a specific processing example of a method for realizing a message interaction in the case that a converged service system does not pre-designate a second identifier according to a method embodiment of the present invention.

### Detailed Description of the Preferred Embodiments

### Function overview

The present invention achieves the purposes of improving the efficiency of service processing between a converged service system and a traditional message system and enhancing users' experience, by establishing a corresponding relationship between a message identifier of the converged service system and a message identifier of the traditional message system and sending correctly a return receipt or a reading report of the traditional message system to a terminal of the converged service system based on the corresponding relationship.

### Network architecture

The network architecture applied in the present invention will be described first before the embodiments of the present invention are described.

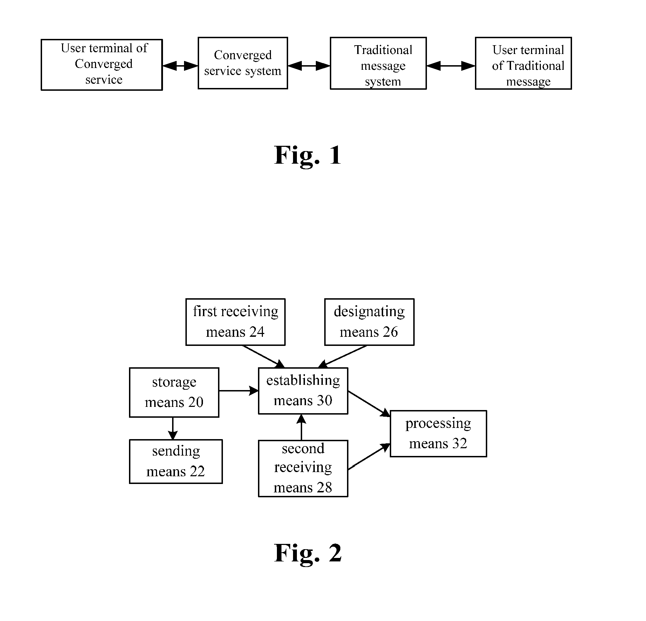

Fig. 1 shows a network architecture applied in the present invention. As shown in Fig. 1, the network architecture comprises the following constituent parts: a converged service system, a traditional message system, a terminal device of the converged service system and a terminal device of the traditional message system. The functions of the above constituent parts will be described hereinafter.

In Fig. 1, the converged service system can provide communication services of converging a message and a session for a user and can run in an IP network based on the SIP.

The terminal device of the converged service system is a user of converged services, and a user terminal of the converged service interacts with the converged service system to accomplish a message interaction process required by the user of the converged service, for example, receiving and sending a message, receiving and sending a return receipt or a reading report, etc.

The traditional message system can provide traditional message services for a user, for example, a short message, a multimedia message, an instant message service, etc.

The terminal device of the traditional message system is a user of traditional message services, and the user terminal of the traditional message interacts with the traditional message system to accomplish an interaction process required by the user of the traditional message, for example, receiving and sending a message, receiving and sending a return receipt or a reading report, etc.

The converged service system is connected to the traditional message system and accomplishes message communication between the user of the converged service and the user of the traditional message service to enhance users' experience.

The converged service system will be described hereinafter according to an embodiment of the present invention.

### System embodiment

According to an embodiment of the present invention, a converged service system is provided, which is used to realize the message interaction with a traditional message system.

Fig. 2 shows a converged service system according to a system embodiment of the present invention. As shown in Fig. 2, the converged service system comprises storage means 20, sending means 22, second receiving means 28, establishing means 30, and processing means 32, as well as one of first receiving means 24 and designating means 26. The functions of the above means will be described in detail hereinafter.

The storage means 20 is configured to store a first message sent by a converged service terminal and a first identifier of the first message.

The sending means 22, connected to the storage means 20, is configured to forward the first message stored by the storage means 20 to the traditional message system.

The first receiving means 24 of the first receiving means 24 or the designating means 26 is configured to receive a response message carrying a second identifier returned, in response to the first message, by the traditional message system; and the designating means 26 of the first receiving means 24 or the designating means 26 is configured to designate a second identifier carried in a second message sent, in response to the first message, by the traditional message system.

The second receiving means 28 is configured to receive the second message carrying the second identifier sent, in response to the first message, by the traditional message system.

The establishing means 30, connected to the storage means 20, and connected to the first receiving means 24 or the designating means 26, is configured to establish a first corresponding relationship between the first identifier stored by the storage means and the second identifier in the response message received by the first receiving means 24, or to establish a second corresponding relationship between the first identifier and the second identifier designated by the designating means 26.

The processing means 32, connected to the establishing means 30 and the second receiving means 28, is configured to process the second message received by the second receiving means 28 according to the first corresponding relationship or the second corresponding relationship established by the establishing means 30.

Preferably, the above second message is one of the followings: a return receipt, a reading report.

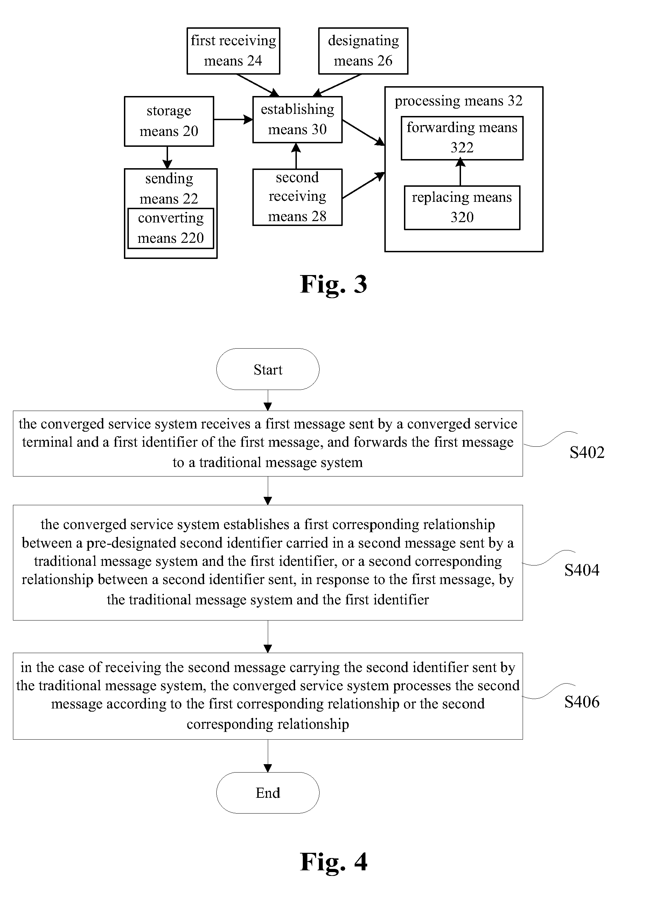

Fig. 3 shows a converged service system according to a preferred embodiment of the present invention. As shown in Fig. 3, the system comprises the storage means 20, the sending means 22, the second receiving means 28, the establishing means 30, the processing means 32, as well as one of the first receiving means 24 and the designating means 26, as shown in Fig. 2.

As shown in Fig. 3, the above sending means 22 may also comprise: converting means 220, configured to convert a format of the first message stored by the storage means 20 into a format supported by the traditional message system so as to forward it to the traditional message system. Moreover, the converted message can be sent via a protocol interface supported by the traditional message system when the converted message is sent.

The above processing means 32 may comprise: replacing means 320, configured to replace a second identifier of a second message saved by the second receiving means with a first identifier; and forwarding means 322, configured to forward the second message in which an identifier has been replaced by the replacing means 320 to the converged service terminal.

By means of the converged service system provided by this embodiment, the corresponding relationship between the message identifier of the converged service system and the message identifier of the traditional message system can be established, and the return receipt or the reading report of the traditional message system can be sent correctly to the terminal of the converged service system based on the corresponding relationship.

### Method embodiment

According to the present embodiment, a method for realizing a message interaction is provided, which is used to realize the message interaction between the converged service system and the traditional message system. This method may be used for the converged service system as shown in Fig. 2.

Fig. 4 shows a processing flow of a method for realizing a message interaction according to a method embodiment of the present invention. This method comprises step S402 to step S406.

Step S402, a converged service system receives a first message sent by a converged service terminal and a first identifier of the first message, and forwards the first message to a traditional message system.

Step S404, the converged service system establishes a first corresponding relationship between a pre-designated second identifier carried in a second message sent by a traditional message system and the first identifier, or a second corresponding relationship between a second identifier sent, in response to the first message, by the traditional message system and the first identifier.

Step S406, in the case of receiving the second message carrying the second identifier sent by the traditional message system, the converged service system processes the second message according to the first corresponding relationship or the second corresponding relationship.

The processing procedure of the above steps will be described in detail hereinafter.

### (1) Step S402

First, the converged service terminal sends the first message and the first identifier of the first message to the converged service system.

Then, the converged service system forwards the first message to the traditional message system, and preferably, the converged service system may convert a format of the first message into a format supported by the traditional message system before forwarding and then sends the first message.

### (2) Step S404

In the case that the converged service system does not pre-designate a second identifier, the traditional message system feedbacks a response message to the converged service system after receiving the first message, and carries a second identifier in the response message; the traditional message system sends the message received from the converged service system to the traditional message terminal.

The converged service system establishes, after receiving the response and the second identifier feedbacked by the traditional message system, a corresponding relationship between the first identifier and the second identifier.

Moreover, after the traditional message system returns the response message carrying the second identifier to the converged service system, the method may also comprise: the traditional message system sends the second message carrying the second identifier to the converged service system, wherein the second message can be initiated either by the traditional message terminal or by the traditional message system. Moreover, the traditional message system may send, after sending the response message, the second message instantly or after a certain time period.

In addition, before the traditional message system sends the second message to the converged service system, the method may also comprise: the traditional message system converts a format of the second message into a format supported by the converged service system so as to send it to the converged service system.

On the other hand, in a case that the converged service system pre-designates a second identifier, after the traditional message system receives the message from the converged service system, the method may also comprise: the traditional message system sends the message received from the converged service system to the traditional message terminal.

### (3) Step S406

The converged service system processes the second message according to the first corresponding relationship or the second corresponding relationship in a case of the converged service system receiving the second message carrying the second identifier sent by the traditional message system. The processing operation is specifically: the converged service system replacing the second identifier carried in the second message with the first identifier, and forwarding the second message to the converged service terminal.

Preferably, the above second message is one of the followings: a return receipt, a reading report.

Taking the case that the converged service system does not pre-designate a second identifier as an example, the specific situation of implementing the method provided by the present embodiment are described hereinafter.

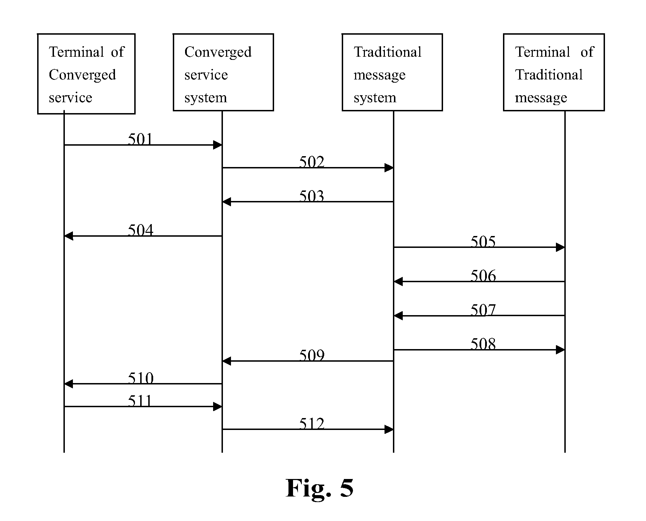

Fig. 5 shows a signaling flow of a specific processing example for a method for realizing a message interaction according to the present invention in a case that the conversed service system does not pre-designate a second identifier. As shown in Fig. 5, the flow comprises step 501 to step 512.

Step 501: a converged service terminal intend to send a message (i.e., the above first message) to a traditional message user and requires returning a return receipt or reading report information, wherein this first message is first sent to a converged service system belonged to by a converged service user (as shown in Fig. 2), and the first message carries a message identifier (i.e., the above first identifier) generated by a converged service client.

Step 502: the converged service system stores the first identifier of the first message received, converts the first message into a format needed by the traditional message service, and sends the first message to the traditional message service system by using a protocol interface supported by the traditional message system.

Step 503: the traditional message service system returns to the converged service system a response message carrying a message identifier (viz. the above second identifier) generated by the traditional message service system.

Step 504: the converged service system stores the above second identifier received, establishes a one-to-one corresponding relationship between the second identifier and the first identifier generated by the converged service client, and returns a response to the converged service client.

Step 505: the traditional message service system continues to send the first message to the traditional message client.

Step 506: the traditional message client returns a response to the traditional message service system.

Step 507: the traditional message client returns a return receipt or a reading report (viz. the above second message), carrying the second identifier generated by the traditional message system, to the traditional message system.

Step 508: the traditional message system returns a response to the traditional message client.

Step 509: the traditional message service sends the second message, carrying the second identifier generated by the traditional message system, to the converged service system.

Step 510: the converged service system finds, after receiving the second message, the corresponding first identifier according to the second identifier carried in the traditional second message, and converts the second message to a second message suitable for the converged service client, and then send the second message to the converged service client, wherein the converted second message comprises the first identifier generated by the converged service client.

Step 511: the converged service client returns a response message to the converged service system.

Step 512: the converged service system returns the response message to the traditional message service system.

To sum up, by means of the technical solution provided by the present invention, the corresponding relationship between the message identifier of the converged service system and the message identifier of the traditional message system is established, and the return receipt or the reading report of the traditional message system can be sent correctly to the terminal of the converged service system based on the corresponding relationship, thereby preventing the problem that the terminal of the converged service system fails to receive correctly the return receipt or the reading report after sending the message to the terminal of the traditional message system, so as to improve effectively the efficiency of service processing between the converged service system and the traditional message system and enhance users' experience.

The descriptions above are only the preferable embodiments of the present invention, which are not used to restrict the present invention. For those skilled in the art, the present invention may have various changes and variations. Any amendments, equivalent substitutions, improvements, etc. within the spirit and principle of the present invention are all included in the scope of the protection of the present invention.

## Claims

1. A method for realizing a message interaction, which is used to realize the message interaction between a converged service system and a traditional message system, **characterized by** the method comprising:
the converged service system receiving a first message sent by the converged service terminal and a first identifier of the first message, and forwarding the first message to the traditional message system;
the converged service system establishing a first corresponding relationship between a pre-designated second identifier carried in a second message sent by the traditional message system and the first identifier, or establishing a second corresponding relationship between a second identifier sent, in response to the first message, by the traditional message system and the first identifier; and
in the case of receiving the second message carrying the second identifier sent by the traditional message system, the converged service system processing the second message according to the first corresponding relationship or the second corresponding relationship.

2. The method according to Claim 1, **characterized in that** it further comprises, before the converged service system forwards the first message sent by the converged service terminal to the traditional message system,
the converged service system converting a format of the first message into a format supported by the traditional message system so as to forward it to the traditional message system.

3. The method according to Claim 1, **characterized in that** it further comprises, in the case that the converged service system does not pre-designate the second identifier, after the traditional message system receives the message from the converged service system,
the traditional message system sending the message received from the converged service system to a traditional message terminal;
the traditional message system returning a response message carrying the second identifier to the converged service system.

4. The method according to Claim 3, **characterized in that** after the traditional message system returns the response message carrying the second identifier to the converged service system, the traditional message system sends the second message carrying the second identifier immediately or after a predetermined time interval to the converged service system.

5. The method according to Claim 1, **characterized in that** it further comprises, in the case that the converged service system pre-designates the second identifier, after the traditional message system receives the message from the converged service system,
the traditional message system sending the message received form the converged service system to the traditional message terminal.

6. The method according to Claim 1, **characterized in that** it further comprises, before the traditional message system sends the second message to the converged service system,
the traditional message system converting a format of the second message into a format supported by the converged service system so as to forward it to the converged service system.

7. The method according to Claim 1, **characterized in that** the operation that the converged service system processes the second message according to the first corresponding relationship or the second corresponding relationship is:
the converged service system replacing the second identifier carried in the second message with the first identifier, and forwarding the second message to the converged service terminal.

8. The method according to any one of Claims 1 to 7, **characterized in that** the second message is one of a return receipt and a reading report.

9. A converged service system, which is used to realize a message interaction with a traditional message system, **characterized by** the converged service system comprising:
storage means, configured to save a first message sent by the converged service terminal and a fist identifier of the first message;
sending means, connected to the storage means, configured to forward the first message stored by the storage means to the traditional message system;
first receiving means or designating means, wherein the first receiving means is configured to receive a response message carrying a second identifier returned by the traditional message system in response to the first message, and the designating means is configured to designate a second identifier carried in a second message sent by the traditional message system in response to the first message;
second receiving means, configured to receive a second message carrying the second identifier sent by the traditional message system in response to the first message;
establishing means, connected to the storage means, and connected to the first receiving means or the designated means, configured to establish a first corresponding relationship between the first identifier stored by the storage means and the second identifier received by the first receiving means, or to establish a second corresponding relationship between the first identifier and the second identifier designated by the denigrating means; and
processing means, connected to the establishing means and the second receiving means, configured to process the second message received by the second receiving means according to the first corresponding relationship or the second corresponding relationship established by the establishing means.

10. The system according to Claim 9, **characterized in that** the sending means further comprises:
converting means, configured to convert a format of the fist message stored by the storage means into a format supported by the traditional message system so as to forward it to the traditional message system.

11. The system according to Claim 9, **characterized in that** the processing means further comprises:
replacing means, configured to replace the second identifier of the second message received by the second receiving means with the first identifier;
forwarding means, configured to forward the second message in which an identifier has been replaced by the replacing means to the converged service terminal.

12. The system according to any one of Claims 9 to 11, **characterized in that** the second message is one of a return receipt and a reading report.
